# EUROPÄISCHE PATENTSCHRIFT

(11) **EP 1 387 943 B1**
(45) Veröffentlichungstag und Bekanntmachung des Hinweises auf die Patenterteilung: **08.03.2006**
(21) Anmeldenummer: 02737803.3
(22) Anmeldetag: 18.04.2002
(51) Int. Cl.: F02M 55/00, F02M 69/46, F02M 61/14

(54) **BRENNSTOFFEINSPRITZANLAGE**
FUEL INJECTION UNIT
DISPOSITIF D'INJECTION DE CARBURANT

(30) Priorität: 05.05.2001 DE 10121884
(43) Veröffentlichungstag der Anmeldung: 11.02.2004
(73) Patentinhaber: ROBERT BOSCH GMBH, 70442 Stuttgart (DE)
(72) Erfinder: MUTSCHLER, Jan, 90547 Stein (DE)
(86) Internationale Anmeldenummer: PCT/DE2002/001433
(87) Internationale Veröffentlichungsnummer: WO 2002/090758

(56) Entgegenhaltungen:
- EP-A- 0 969 203
- DE-A- 19 953 888
- US-A- 5 209 204
- US-A- 6 148 797

## Beschreibung

### Stand der Technik

Die Erfindung geht aus von einer Brennstoffeinspritzanlage zum Einspritzen von Brennstoff in eine Brennkraftmaschine, insbesondere zum direkten Einspritzen von Brennstoff in den Brennraum bzw. die Brennräume der Brennkraftmaschine, nach der Gattung des Hauptanspruchs.

Eine solche Brennstoffeinspritzanlage ist aus der DE 197 25 076 A1 bekannt. Sie weist zur dichtenden Verbindung zwischen einem Brennstoffeinspritzventil und einem zugeordneten Verbindungsstutzen einer Brennstoffverteilerleitung jeweils einen ringförmigen Dichtungsträger auf, der mit einem ersten Dichtungselement zur Abdichtung des Dichtungsträgers gegenüber einer Stirnfläche eines Zulaufabschnitts des Brennstoffeinspritzventils und mit einem zweiten Dichtungselement zur Abdichtung des Dichtungsträgers gegenüber dem Verbindungsstutzen der Brennstoffverteilerleitung zusammenwirkt. Eine in eine Brennstoff-Einlaßöffnung des Zulaufabschnitts einsetzbare Buchse durchdringt den ringförmigen Dichtungsträger, so daß der Dichtungsträger zwischen einem stromaufwärtigen Kragen der Buchse und dem Zulaufabschnitt des Brennstoffeinspritzventils in radialer Richtung beweglich arretiert ist.

Nachteilig an der in der obengenannten Druckschrift beschriebenen Anordnung ist insbesondere, daß es aufgrund der Fertigungstoleranzen sowohl der Aufnahmebohrung für das Brennstoffeinspritzventil als auch des Verbindungsstutzens an der Brennstoffverteilerleitung zu Positionsabweichungen und Winkelabweichungen zwischen dem Zulaufabschnitt des Brennstoffeinspritzventils einerseits und dem Verbindungsstutzen der Brennstoffverteilerleitung andererseits kommen kann. Die zwischen dem Zulaufabschnitt des Brennstoffeinspritzventils und dem Anschlußstutzen der Brennstoffverteilerleitung angeordnete Dichtung gleicht die Positions- und Winkelabweichungen nur in einem geringen, unzureichenden Umfang aus. Bei den in der Praxis auftretenden Positions- und Winkelabweichungen besteht bei bekannten Brennstoffeinspritzanlagen die Gefahr des Brennstoffaustritts an der die Positions- und Winkelabweichungen nicht hinreichend ausgleichenden Dichtung.

Aus der US 5,209, 204 A ist bereits eine Brennstoffeinspritzanlage zum Einspritzen von Brennstoff in eine Brennkraftmaschine bekannt, die zumindest zwei Brennstoffeinspritzventile und eine Brennstoffverteilerleitung umfasst. Die Brennstoffverteilerleitung weist für jedes Brennstoffeinspritzventil einen mit einem zulaufseitigen Ende des Brennstoffeinspritzventils verbindbaren Anschlussstutzen auf, wobei zur dichtenden Verbindung des Brennstoffeinspritzventils mit zwei ringförmig und konzentrisch zueinander verlaufenden Anschlussstutzen der Brennstoffverteilerleitung jeweils eine ringförmige Dichtung vorgesehen ist und der innere Anschlussstutzen so geformt ist, dass dieser nach der Montage der Dichtelemente an dem dem Brennstoffeinspritzventil zugewandten Ende des inneren Anschlussstutzens in das zulaufseitige Ende des Brennstoffeinspritzventils einschiebbar und mit einem ersten Dichtelement abgedichtet ist. Der äußere Anschlussstutzen greift in eine ringförmige Ausnehmung in einem topfförmig ausgebildeten Anschlusszapfen des Brennstoffeinspritzventils ein. Zwischen dem äußeren Anschlussstutzen der Brennstoffverteilerleitung und der inneren Wandung der ringförmigen Ausnehmung des Anschtusszapfens ist das zweite Dichtelement eingebracht. Die Abmessungen der beiden Dichtelemente sind so gewählt, dass die Verbindung des Brennstoffeinspritzventils mit der Brennstoffverteilerleitung unter einer leichten elastischen Verformung der Dichtelemente zustande kommt. In seiner axialen Lage wird das Brennstoffeinspritzventil durch Anliegen des ersten Dichtelements am Boden des inneren Anschlusszapfens und in seiner radialen Lage durch das an der Innenseite des äußeren Anschlussstutzens anliegende zweite Dichtelement gehalten, so dass das der Anschlussstutzen der Brennstoffverteilerleitung und der Anschlusszapfen im wesentlichen durch die Dichtelemente voneinander abgekoppelt sind.

### Vorteile der Erfindung

Die erfindungsgemäße Brennstoffeinspritzanlage mit den kennzeichnenden Merkmalen des Hauptanspruchs hat demgegenüber den Vorteil, daß bedingt durch das Einschieben des Anschlußstutzens in eine Ausnehmung des Brennstoffeinspritzventils eine sehr platzsparende Verbindung geschaffen wird. Ein zwischen dem Anschlußstutzen der Brennstoffverteilerleitung und einem Zulaufstutzen des Brennstoffeinspritzventils angeordnetes Federelement kann Fertigungstoleranzen, Schrägstellungen beim Einbau des Brennstoffeinspritzventils in den Zylinderkopf sowie ungleichmäßige Erwärmung beim Betrieb der Brennkraftmaschine effektiv und platzsparend ausgleichen.

Durch die in den Unteransprüchen aufgeführten Maßnahmen sind vorteilhafte Weiterbildungen und Verbesserungen der im Hauptanspruch angegebenen Brennstoffeinspritzanlage möglich.

Von Vorteil ist die Möglichkeit, das Federelement in verschiedenen Varianten je nach den herrschenden Niederhaltekräften als Teller- oder Schraubenfeder auszuführen.

Weiterhin ist von Vorteil, daß die Brennstoffeinspritzventile jeweils mittels einer Halterungsklammer an der Brennstoffverteilerleitung vormontierbar sind, wodurch bei der Endmontage der Brennstoffeinspritzventile im Zylinderkopf eine erhebliche Zeitersparnis möglich ist.

Vorteilhafterweise ist die Brennstoffverteilerleitung mit dem Zylinderkopf verschraubt oder mittels Niederhaltern oder ähnlicher Vorrichtungen mit dem Zylinderkopf verbunden.

### Zeichnung

Ausführungsbeispiele der Erfindung sind in der Zeichnung vereinfacht dargestellt und in der nachfolgenden Beschreibung näher erläutert. Es zeigen:
- Fig. 1: einen Schnitt durch ein erstes Ausführungsbeispiel einer erfindungsgemäßen Brennstoffeinspritzanlage in einer Gesamtdarstellung,
- Fig. 2A: einen Schnitt durch ein einzelnes Brennstoffeinspritzventil der in Fig. 1 dargestellten Brennstoffeinspritzanlage, und
- Fig. 2B: ein zweites Ausführungsbeispiel eines zum Einbau in die erfindungsgemäße Brennstoffeinspritzanlage geeigneten Brennstoffeinspritzventils.

### Beschreibung der Ausführungsbeispiele

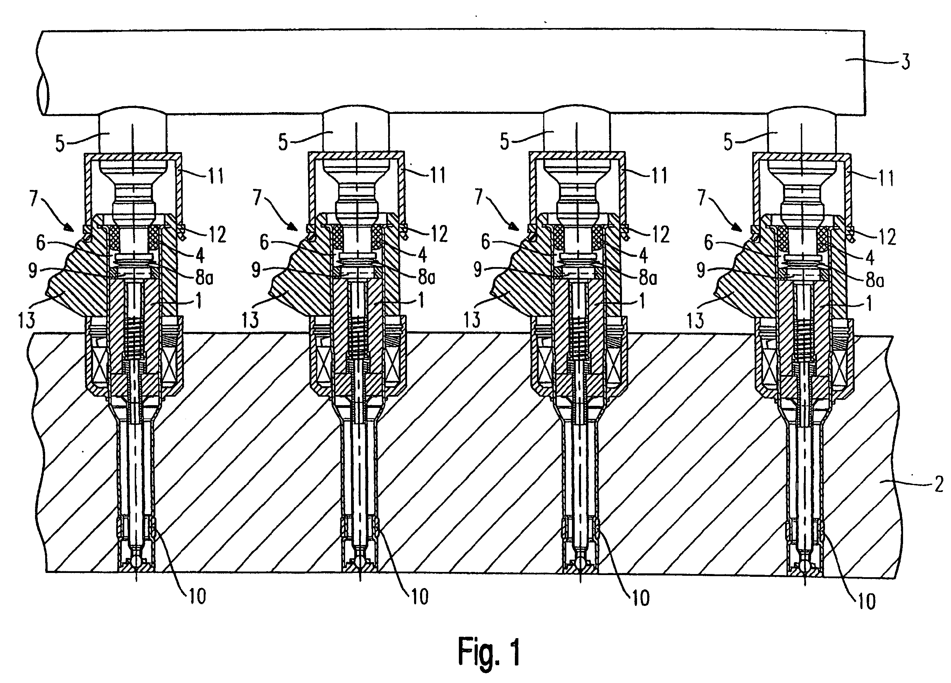

Fig. 1 zeigt in einem schematischen Schnitt eine Gesamtansicht eines ersten Ausführungsbeispiels einer erfindungsgemäß ausgestalteten Brennstoffeinspritzanlage, die im vorliegenden Ausführungsbeispiel vier Brennstoffeinspritzventile 1 aufweist. Die Brennstoffeinspritzventile 1 sind vorzugsweise in Form von Hochdruck-Brennstoffeinspritzventilen 1 zum direkten Einspritzen von Brennstoff in die Brennräume einer gemischverdichtenden, fremdgezündeten Brennkraftmaschine geeignet. Es werden im Folgenden nur diejenigen Bauteile erläutert, die in direktem Zusammenhang mit den erfindungsgemäßen Maßnahmen stehen.

Die Brennstoffeinspritzventile 1 sind in einer Reihenanordnung in einen Zylinderkopf 2 der Brennkraftmaschine eingebaut und mittels einer Brennstoffverteilerleitung 3 untereinander verbunden. Die erfindungsgemäßen Maßnahmen beziehen sich auf die Verbindung der Brennstoffeinspritzventile 1 mit der Brennstoffverteilerleitung 3.

Die Verbindung der Brennstoffeinspritzventile 1 zur Brennstoffverteilerleitung 3 erfolgt dabei mittels Dichtungen 4, die in nutförmige Vertiefungen am äußeren Umfang der Anschlußstutzen 5 der Brennstoffverteilerleitung 3 eingebracht sind. Die Anschlußstutzen 5 sind dabei so ausgeformt, daß sie jeweils in eine Ausnehmung 6 in zulaufseitigen Enden 7 der Brennstoffeinspritzventile 1 einschiebbar sind. Durch eine Verquetschung der Dichtungen 4 kann eine zuverlässige Dichtwirkung zwischen der Brennstoffverteilerleitung 3 und den Brennstoffeinspritzventilen 1 erzielt werden.

Weiterhin ist zur Übertragung der Preßkraft der Brennstoffverteilerleitung 3, die mit dem Zylinderkopf 2 beispielsweise mittels nicht dargestellter Halterungen oder Pratzen verbunden sein kann, auf die Brennstoffeinspritzventile 1 jeweils ein Federelement 8 vorgesehen, welches im vorliegenden ersten Ausführungsbeispiel als Tellerfeder 8a ausgebildet ist. Die Tellerfedern 8a sind zwischen den Anschlußstutzen 5 der Brennstoffverteilerleitung 3 und inneren Abstützflächen 9 in den Ausnehmungen 6 der Brennstoffeinspritzventile 1 eingelegt und sorgen durch ihre Vorspannung für einen Übertrag der Niederhaltekräfte der Brennstoffverteilerleitung 3, die durch Haltevorrichtungen an den Zylinderkopf 2 gezogen wird, auf die Brennstoffeinspritzventile 1, die dadurch in den Zylinderkopf 2 eingepreßt werden. Zur Abdichtung des Zylinderkopfes 2 gegen die Brennräume können Dichtringe 10, die zwischen den Brennstoffeinspritzventilen 1 und dem Zylinderkopf 2 eingepreßt sind, vorgesehen sein. Die Abstützflächen 9 in den Ausnehmungen 6 sind an Stützscheiben 14 ausgebildet, die auf den Innenpolen 15 der Brennstoffeinspritzventile 1 angeordnet sind.

Zur Fixierung der Anschlußstutzen 5 an den Brennstoffeinspritzventilen 1 sind Halterungsklammern 11 vorgesehen, die insbesondere zur Vormontage der Brennstoffeinspritzventile 1 an der Brennstoffverteilerleitung 3 geeignet sind, da dann die gesamte Brennstoffeinspritzanlage auf einmal in und am Zylinderkopf 2 montiert werden kann. Die Halterungsklammern 11 umgreifen dabei die Anschlußstutzen 5 der Brennstoffverteilerleitung 3 und erstrecken sich bis zum zulaufseitigen Ende 7 der Brennstoffeinspritzventile 1, wo sie vorzugsweise mittels Schrauben 12 in einer Kunststoffumspritzung 13 der Brennstoffeinspritzventile 1 verankert sind. Als Alternative dazu können an den Kuststoffumspritzungen 13 herausragende Nasen vorgesehen sein, die in Öffnungen der Halterungsklammern 11 eingreifen.

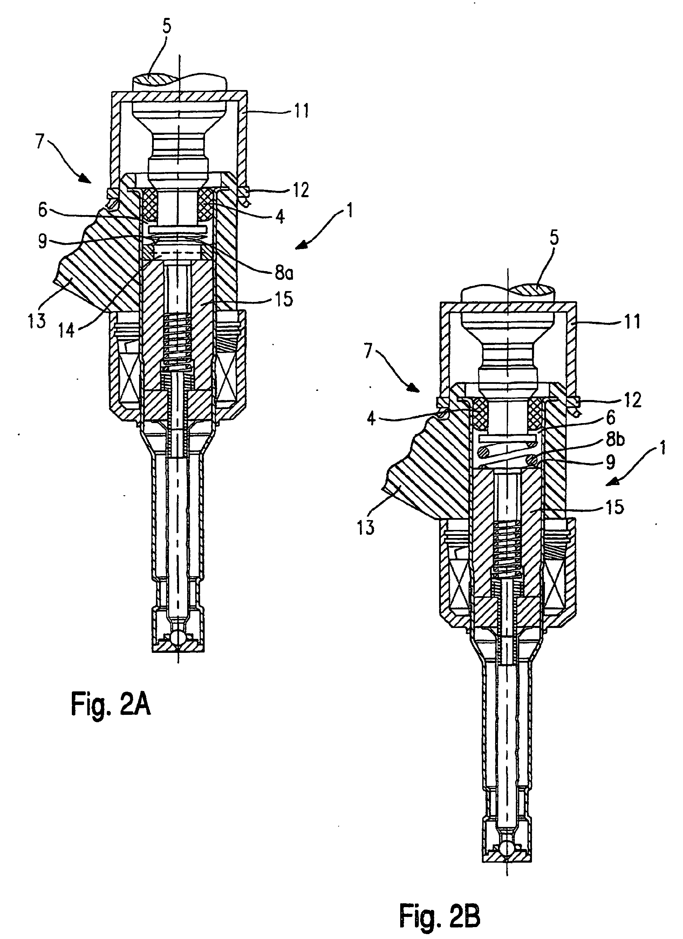

Fig. 2A zeigt zur Verdeutlichung der erfindungsgemäßen Maßnahmen ein einzelnes Brennstoffeinspritzventil 1 mit dem darin eingesteckten Anschlußstutzen 5 der Brennstoffverteilerleitung 3 und der Halterungsklammer 11. Übereinstimmende Bauteile sind dabei mit übereinstimmenden Bezugszeichen versehen.

Wie bereits anhand von Fig. 1 erläutert, weist das Brennstoffeinspritzventil 1 zwischen dem Anschlußstutzen 5 der Brennstoffverteilerleitung 3 und der Stützscheibe 14 ein Federelement 8 auf, welches im vorliegenden Ausführungsbeispiel in Form einer Tellerfeder 8a ausgebildet ist. Die Tellerfeder 8a sorgt einerseits für die Übertragung der Niederhaltekräfte der Brennstoffverteilerleitung 3, andererseits können Versätze und Verkippungen des Brennstoffeinspritzventils 1, welche beispielsweise durch Fertigungstoleranzen der einzelnen Bauteile, durch eine schiefe Montage des Brennstoffeinspritzventils 1 im Zylinderkopf 2 oder durch die Erwärmung des Zylinderkopfes 2 und des Brennstoffeinspritzventils 1 beim Betrieb der Brennkraftmaschine entstehen, ausgeglichen und damit die zuverlässige Dichtung einerseits des Zylinderkopfes 2 gegen den Brennraum der Brennkraftmaschine und andererseits des Brennstoffeinspritzventils 1 gegen die Brennstoffverteilerleitung 3 erhalten werden.

Fig. 2B zeigt in gleicher Darstellung wie Fig. 2A ein zweites Ausführungsbeispiel eines Brennstoffeinspritzventils 1 zum Einbau in die erfindungsgemäß ausgestaltete Brennstoffeinspritzanlage.

Im vorliegenden zweiten Ausführungsbeispiel ist das Federelement 8 in Form einer Schraubenfeder 8b ausgebildet. Diese hat insbesondere den Vorteil einfacher Herstellbarkeit und einer im Vergleich zur Tellerfeder 8a größeren Flexibilität, da Tellerfedern 8a insbesondere bei kleinen Radien zumeist eine höhere Federkonstante aufweisen. Durch die Schraubenfeder 8b ist ein gleichmäßigerer Ausgleich von Versätzen und Verkippungen möglich. Die Schraubenfeder 8b stützt sich unmittelbar am Innenpol 15 des Brennstoffeinspritzventils 1 ab.

Die Erfindung ist nicht auf die dargestellten Ausführungsbeispiele beschränkt und beispielsweise auch für Brennstoffeinspritzanlagen von gemischverdichtenden, -selbstzündenden Brennkraftmaschinen geeignet.

## Patentansprüche

1. Brennstoffeinspritzanlage zum Einspritzen von Brennstoff in eine Brennkraftmaschine mit zumindest einem Brennstoffeinspritzventil (1) und einer Brennstoffverteilerleitung (3), die für jedes Brennstoffeinspritzventil (1) einen mit einem zulaufseitigen Ende (7) des Brennstoffeinspritzventils (1) verbindbaren Anschlußstutzen (5) aufweist, wobei zur dichtenden Verbindung des Brennstoffeinspritzventils (1) mit dem zugeordneten Anschlußstutzen (5) der Brennstoffverteilerleitung (3) jeweils eine ringförmige Dichtung (4) vorgesehen ist und der Anschlußstutzen (5) so geformt ist, daß dieser nach der Montage der Dichtung (4) an dem dem Brennstoffeinspritzventil (I) zugewandten Ende des Anschlußstutzens (5) in das zulaufseitige Ende (7) des Brennstoffeinspritzventils (1) einschiebbar ist, wobei zwischen einer stromabwärtigen Stirnfläche des Anschlußstutzens (5) und einer inneren Abstützfläche (9) in einer Ausnehmung (6) des Brennstoffeinspritzventils (1) ein Federelement (8) angeordnet ist **dadurch gekennzeichnet, daß** die innere Abstützfläche (9) für das Federelement (8) an einem Innenpol (15) oder an einer Stützscheibe (14) auf dem lnnenpol (15) vorgesehen ist.

2. Brennstoffeinspritzanlage nach Anspruch 1,
**dadurch gekennzeichnet,**
**daß** die Brennstoffverteilerleitung (3) mit einem Zylinderkopf (2) der Brennkraftmaschine verbunden ist.

3. Brennstoffeinspritzanlage nach Anspruch 1 oder 2,
**dadurch gekennzeichnet,**
**daß** das Federelement (8) in Form einer Tellerfeder (8a) ausgebildet ist.

4. Brennstoffeinspritzanlage nach Anspruch 1 oder 2,
**dadurch gekennzeichnet,**
**daß** das Federelement (8) in Form einer Schraubenfeder (8b) ausgebildet ist.

5. Brennstoffeinspritzanlage nach einem der Ansprüche 1 bis 4,
**dadurch gekennzeichnet,**
**daß** jedes Brennstoffeinspritzventil (1) an je einem Anschlußstutzen (5) der Brennstoffverteilerleitung (3) mittels einer Halterungsklammer (11) vormontierbar ist.

6. Brennstoffeinspritzanlage nach Anspruch 5,
**dadurch** gekennzeichxiet,
daß die Halterungsklammer (11) mittels Schrauben (12) oder Klammern an einer Kunststoffumspritzung (13) des Brennstoffeinspritzventils (1) befestigt ist.

7. Brennstoffeinspritzanlage nach Anspruch 5,
**dadurch gekennzeichnet,**
**daß** an einer Kunststoffumspritzung (13) des Brennstoffeinspritzventils (1) wenigstens eine hervorstehende Nase vorgesehen ist, die in eine Öffnung der Halterungsklammer (11) eingreift.

8. Brennstoffeinspritzanlage nach einem der Ansprüche 1 bis 7,
**dadurch gekennzeichnet,**
**daß** die an der Brennstoffverteilerleitung (3) angebrachten Brennstoffeinspritzventile (1) gleichzeitig in den Zylinderkopf (2) der Brennkraftmaschine einsetzbar sind.

## Claims

1. Fuel injection system for the injection of fuel into an internal combustion engine, with at least one fuel injection valve (1) and with a fuel distributor line (3) which has for each fuel injection valve (1) a connection piece (5) connectable to an inflow-side end (7) of the fuel injection valve (1), in each case an annular seal (4) being provided for the sealing connection of the fuel injection valve (1) to the assigned connection piece (5) of the fuel distributor line (3), and the connection piece (5) being shaped in such a way that, after the mounting of the seal (4) at that end of the connection piece (5) which faces the fuel injection valve (1), the said connection piece can be pushed into the inflow-side end (7) of the fuel injection valve (1), a spring element (8) being arranged between a downstream end face of the connection piece (5) and an inner supporting face (9) in a recess (6) of the fuel injection valve (1), **characterized in that** the inner supporting face (9) for the spring element (8) is provided at an internal pole (15) or at a supporting washer (14) on the internal pole (15).

2. Fuel injection system according to Claim 1, **characterized in that** the fuel distributor line (3) is connected to a cylinder head (2) of the internal combustion engine.

3. Fuel injection system according to Claim 1 or 2, **characterized in that** the spring element (8) is designed in the form of a cup spring (8a).

4. Fuel injection system according to Claim 1 or 2, **characterized in that** the spring element (8) is designed in the form of a helical spring (8b).

5. Fuel injection system according to one of Claims 1 to 4, **characterized in that** each fuel injection valve (1) can be premounted by means of a retaining clip (11) in each case on a connection piece (5) of the fuel distributor line (3).

6. Fuel injection system according to Claim 5, **characterized in that** the retaining clip (11) is fastened by means of screws (12) or clips to a plastic injection-moulded surround (13) of the fuel injection valve (1).

7. Fuel injection system according to Claim 5, **characterized in that** at least one projecting nose, which engages into an orifice of the retaining clip (11), is provided on a plastic injection-moulded surround (13) of the fuel injection valve (1).

8. Fuel injection system according to one of Claims 1 to 7, **characterized in that** the fuel injection valves (1) attached to the fuel distributor line (3) can be inserted simultaneously into the cylinder head (2) of the internal combustion engine.

## Revendications

1. Dispositif d'injection de carburant pour injecter du carburant dans un moteur à combustion interne, comprenant au moins un injecteur de carburant (1) et une conduite de distribution de carburant (3) qui présente, pour chaque injecteur de carburant (1), un manchon de raccordement (5) pouvant être relié à une extrémité (7) de l'injecteur de carburant (1) du côté de l'admission, avec un joint d'étanchéité annulaire (4) prévu chaque fois pour relier de manière étanche l'injecteur de carburant (1) au manchon de raccordement associé (5) de la conduite de distribution de carburant (3) et le manchon de raccordement (5) étant façonné pour être, après le montage du joint d'étanchéité (4) sur l'extrémité du manchon de raccordement (5) en regard de l'injecteur de carburant (1), inséré dans l'extrémité (7) de l'injecteur de carburant (1) du côté de l'admission, un élément de ressort (8) étant disposé dans un évidement (6) de l'injecteur de carburant (1) entre une surface frontale, en aval, du manchon de raccordement (5) et une surface d'appui interne (9),
**caractérisé en ce que**
la surface d'appui interne (9) pour l'élément de ressort (8) est prévue sur un pôle interne (15) ou sur une rondelle de support (14) sur le pôle interne (15).

2. Dispositif d'injection de carburant selon la revendication 1,
**caractérisé en ce que**
la conduite de distribution de carburant (3) est reliée à une culasse (2) du moteur à combustion interne.

3. Dispositif d'injection de carburant selon la revendication 1 ou 2,
**caractérisé en ce que**
l'élément de ressort (8) a la forme d'une rondelle de Belleville (8a).

4. Dispositif d'injection de carburant selon la revendication 1 ou 2,
**caractérisé en ce que**
l'élément de ressort (8) a la forme d'un ressort hélicoïdal (8b).

5. Dispositif d'injection de carburant selon l'une des revendications 1 à 4,
**caractérisé en ce que**
chaque injecteur de carburant (1) peut être prémonté chaque fois sur un manchon de raccordement (5) de la conduite de distribution de carburant (3) au moyen d'un clip de fixation (11).

6. Dispositif d'injection de carburant selon la revendication 5,
**caractérisé en ce que**
le clip de fixation (11) est fixé, au moyen de vis (12) ou de clips, à une enveloppe en matière plastique (13) de l'injecteur de carburant (1).

7. Dispositif d'injection de carburant selon la revendication 5,
**caractérisée en ce qu'**
au moins un nez en saillie prévu sur une enveloppe en matière plastique (13) de l'injecteur de carburant (1), s'engage dans une ouverture du clip de fixation (11).

8. Dispositif d'injection de carburant selon l'une des revendications 1 à 7,
**caractérisé en ce que**
les injecteurs de carburant (1) disposés sur la conduite de distribution de carburant (3) peuvent être engagés en même temps dans la culasse (2) du moteur à combustion interne.
